# EUROPEAN PATENT APPLICATION

(11) **EP 4 686 555 A1**
(43) Date of publication of application: **04.02.2026**
(21) Application number: 24382857.1
(22) Date of filing: 01.08.2024
(51) Int. Cl.: B29C 70/50, B29C 70/74, B29C 70/86, B29C 70/20

(54) **AN INJECTOR APPARATUS AND A KIT FOR AN INJECTOR APPARATUS**

(71) Applicant: Reinforce3D, S.L., 43870 Amposta (ES)
(72) Inventor: CRESCENTI SAVALL, Marc, 43870 Amposta (ES); ROSELLÓ VAN SCHOOR, Marc, 43870 Amposta (ES); VALENTIN BADON, Clément, 43870 Amposta (ES)
(74) Representative: Ponti & Partners, S.L.P

(57) **Abstract**

The present invention relates to an injector apparatus, for injecting, by holding and dragging, a reinforcement elongate member (E) into a tubular cavity of a body, which comprises:
- a first module (M1) having a first channel (Ch1) with an inlet (Ch1i) and an outlet (Ch1o);
- a second module (M2) placed, at least in part, adjacent to that first channel inlet (Ch1i), and being relatively moveable with respect to the first module (M1); and
- a holding system (C2) to hold a segment of the reinforcement elongate member (E) located at the second module (M2), and to relatively move with the second module (M2) in an approaching movement, to drag the held segment and cause the longitudinal displacement of the reinforcement elongate member (E) through the first channel (Ch1).

The invention also relates to a kit comprising the first (M1) and second (M2) modules of the injector apparatus of the invention.

## Description

### Field of the Invention

The present invention generally relates, in a first aspect, to an injector apparatus, for injecting, by holding and dragging, a reinforcement elongate member into a tubular cavity of a body, implemented as a modular system.

In a second aspect, the present invention also relates to a kit for an injector apparatus, comprising the first and second modules of the injector apparatus of the first aspect.

### Background of the Invention

Injector apparatuses, for injecting, by holding and dragging, a reinforcement elongate member into a tubular cavity of a body are known in the art.

That is the case of the injector apparatus described in EP3231592B1, which is disclosed therein as a possible implementation of a system for exerting a mechanical force on a continuous fibre bundle to carry out the introduction of the continuous fibre bundle in the interior of a tubular cavity.

These injector apparatuses are generally made for the specific application described in that patent EP3231592B1, i.e. for CFIP (Continuous Fibre Injection Process) technology, where a body containing tubular cavities within it is reinforced by injecting continuous fibres and liquid resin into said cavities, where the fibres and the liquid resin are injected by applying (i) pressure on the resin, which causes a resin flow that lubricates the cavity and drag forces on the fibre bundle and/or (ii) a pushing force applied on the fibres at the tubular cavity inlet, where that pushing force can be applied by a system based on clamping and dragging the fibres as described in said patent.

In that patent, the injector apparatus is just described broadly as a system for clamping and dragging, by displacement, the continuous fibre bundle. No further technical details are provided.

CFIP technology is based on a new manufacturing concept: injecting continuous fibres inside bodies instead of placing them upon surfaces or pulling them through a mould, as in the other composite manufacturing methods. For this reason there are not yet other injector apparatuses based on holding and dragging really developed and publicly disclosed.

It is therefore necessary to provide an alternative to the state of the art which covers the gaps found therein, by providing an injector apparatus based on holding an dragging but which is really developed in comparison with those of the prior art, and that allows its use for CFIP technology but also for any other technology for injecting elongate members into tubular cavities.

### Description of the Invention

To that end, the present invention relates, in a first aspect, to an injector apparatus, for injecting, by holding and dragging, a reinforcement elongate member into a tubular cavity of a body.

The reinforcement elongate element can be any considered appropriate for its injection into a tubular cavity of a body, such as all those continuous fibre bundles described in EP3231592B1 or all the pushable reinforcement elongate members described in patent application EP23382160, whose contents are incorporated herein by reference to define some embodiments of the reinforcement elongate member.

In contrast to the injector apparatuses known in the prior art, the injector apparatus of the first aspect of the present invention comprises:
- a first module having a first channel with:
   - an inlet configured for receiving the reinforcement elongate member to be longitudinally displaced through said first channel, and
   - an outlet configured for being coupled to an inlet orifice of the tubular cavity, for injecting therein the reinforcement elongate member exiting through said outlet after being longitudinally displaced through the first channel;
- a second module placed, at least in part, adjacent to said first channel inlet, and being relatively moveable with respect to said first module in an approaching/distancing alternative movement; and
- a holding system configured and arranged to hold a segment of the reinforcement elongate member located at said second module, outside said first channel, and to relatively move, at least in part, with the second module in an approaching movement of said approaching/distancing alternative movement, while said segment is held, to drag the held segment so as to push any other segment of the reinforcement elongate member already placed within the first channel, to cause said longitudinal displacement of the reinforcement elongate member through the first channel, towards the tubular cavity.

The injector apparatus of the first aspect of the present invention can be applied to manufacture a part made from composite material, wherein the part initially comprises a body with one or more tubular cavities, so that one or more reinforcement elongated members and liquid resin can be injected into those tubular cavities and when the resin cures and solidifies, a reinforced part is finally obtained.

According to an embodiment, the holding system is configured and arranged to unhold said segment of the reinforcement elongate member, and to make at least part of the holding system and the second module relatively move with respect to the first module, in a distancing movement of said approaching/distancing alternative movement, when said segment is unheld.

For an embodiment, the injector apparatus further comprises a further holding system configured and arranged to hold said segment of the reinforcement elongate member located inside the first channel during said distancing movement, to avoid the movement of the reinforcement elongate member.

Preferably, the above embodiment is combined with the embodiment to form a combined embodiment for which the holding system (i.e. that of the second module) unholds the segment of the reinforcement elongate member, so that during the distancing movement the reinforcement elongate member is only held by the further holding system (i.e., that of the first module).

However, alternatively, for a slight variation of that combined embodiment, the holding system of the second module does not completely unhold the segment placed therein but holds the same with a lower force than the holding force exerted by the further holding system, so that during the distancing movement the second module can still relatively move with respect to the first module while the reinforcement elongate member remains stationary.

For an embodiment, the holding system (i.e., that of the second module) holds the segment of the reinforcement elongate member present in the second module, while the further holding system (i.e., that of the first module) does not hold the segment present in the first channel, resin is injected, and the distancing movement is carried out. With these actions, what is achieved is to tension and realign the fibers contained in the reinforcement elongate member (when this contains fibers) during the injection process, in such a way that it facilitates the advancement of the resin through the tubular cavity of the body and the injection performance is improved.

For a non-preferred embodiment, the injector apparatus does not include any resin input, and the reinforcement elongate member is in a prepreg format, i.e. already combined with a non-cured thermoset resin.

However, in a preferred embodiment, the first channel has a resin inlet for receiving resin, wherein the injector apparatus further comprises a resin impulsion unit for injecting resin into the first channel through said resin inlet, so that both the resin and the reinforcement elongate member come out mixed towards the interior of the tubular cavity of the body to be reinforced.

For an implementation of that embodiment, the first channel also comprises a resin outlet longitudinally distanced from the resin inlet along the first channel and fluidically connected to the resin impulsion unit for implementing a closed fluidic circuit, wherein the resin impulsion unit is configured for recirculating resin through at least body of the first channel by injecting resin through the resin inlet and receiving the resin from the resin outlet or vice versa.

Alternately, the resin inlet and/or resin outlet can be located at a different location, such as at the second channel.

In order to maximize the level of impregnation of the reinforcement elongate member before entering the tubular cavity, for some implementation of that embodiment, those locations for the resin inlet and resin outlet are within an area in the first and/or second module where resin recirculation occurs in a length of the reinforcement elongate member equal to or greater than the displacement produced in the approaching movement. The basic concept is that each section of the reinforcement elongate member that advances, before being introduced into the tubular cavity, is subjected to a recirculation of resin for a certain time or up to a recirculated volume several times greater than that inside the injector apparatus in the length where it is applied, in such a way that the resin drags the air towards the outside of the injector apparatus and thus improves the impregnation of the reinforcement elongate member before being introduced into the tubular cavity.

For an embodiment, with a system of valves, the direction of resin flow is managed and it is controlled whether the resin recirculates (the reinforcement elongate member does not move at that moment) or the recirculation stops and the resin enters the interior of the tubular cavity to inject the reinforcement elongate member sections already impregnated with resin.

According to an embodiment, the second module comprises a second channel for the passage of the reinforcement elongate member therethrough, and the holding system is configured and arranged to hold said segment when placed within said second channel.

According to an implementation of that embodiment, the second channel comprises a flexible tube, and the holding system is configured and arranged to hold said segment when placed within said flexible tube, by transversally pressing the flexible tube, so that the flexible tube and the segment held thereinto move together in said approaching movement.

Preferably, the flexible tube is made of an elastomeric material.

For a variant of that implementation, the second channel further comprises a rigid tube with an inlet fluidically connected to an outlet of the flexible tube of the second channel, wherein the first channel comprises a rigid tubular through opening for receiving said rigid tube, and wherein the rigid tube is configured and arranged to enter, by its free end, into said rigid tubular through opening and to longitudinally displace therethrough, during the distancing movement together with the flexible tube, and during the approaching movement also together with the reinforcement elongate member segment held into the flexible tube.

For an alternative variant of that implementation, the second channel further comprises a rigid tubular through opening with an inlet fluidically connected to an outlet of the flexible tube of the second channel, wherein the first channel comprises a rigid tube configured and arranged to enter, by its free end, into said rigid tubular through opening and to longitudinally displace therethrough, during the distancing movement during which said rigid tubular through opening moves together with the flexible tube, and during the approaching movement during which the rigid tubular through opening moves together with the flexible tube and also together with the reinforcement elongate member segment held into the flexible tube.

For an embodiment, the rigid tube of any of those variants has an inner diameter ranging between 75% and 95% the diameter of the rigid tubular through opening.

For rigid tubes having a non-circular cross-section, that relative range given for those inner diameters are also valid for the measurements of their equivalent diameters or of other equivalent dimension parameters.

That diameter range means that the rigid tube has a thin wall, so that the reinforcement elongate element is well guided through all the path within the first and second channels, not existing a great change in the diameters of the channels through which is being displaced when passing from the rigid tube (second channel) to the rigid tubular through opening (first channel), to avoid the reinforcement elongate element suffering from buckling and allow a high pushing longitudinal force be applied thereto.

For some embodiments, the holding system of the second module has a double function: to hold the reinforcement elongate member so that it advances towards the interior of the tubular cavity within the body to be reinforced and to prevent the resin from coming out of the back of the injector apparatus, so that it can only go towards the interior of the tubular cavity together with the reinforcement elongate member, to carry out the simultaneous injection of reinforcement elongate member and resin.

For some embodiments, the further holding system of the first module also has a double function: to hold the reinforcement elongate member so that it does not moves back with the second module in the distancing movement and to improve the impregnation of the reinforcement elongate member, since when held (generally by pressing), it helps the resin enter the interior of the reinforcement elongate member and move the air towards the perimeter area, which can be expelled if resin is recirculated at the same time.

According to an embodiment, the first channel comprises a further flexible tube, and the further holding system is configured and arranged to hold the segment of the reinforcement elongate member located inside the first channel when placed within said further flexible tube, by transversally pressing the further flexible tube.

Preferably, the further flexible tube is made of an elastomeric material.

For some embodiments, the flexible tube or both the flexible tube and the further flexible tube is/are more deformable under a radial compression force than under a radial expansion force. This can be achieved, for example, using a tube of elastomeric material reinforced with a perimeter mesh of fiberglass, aramid or polyester.

In an implementation of that embodiment, the first channel further comprises the above mentioned rigid tubular through opening fluidically connected with an inlet of said further flexible tube.

According to a variant of that embodiment, the first channel further comprises an outlet rigid tube, constituting the outlet of the first channel and being fluidically connected with an outlet of the further flexible tube.

In an embodiment, the injector apparatus of the first aspect of the present invention comprises a guide arrangement for linearly guiding the second module with respect to the first module according to the above mentioned approaching/distancing alternative movement.

For an embodiment, the injector apparatus of the first aspect of the present invention comprises a first support for supporting the first module in a stationary manner and a second support for supporting the second module in a movable manner through that guide arrangement.

According to an embodiment, those first and second supports are mounted on a common structure.

For an embodiment, all or most of the components of the injection apparatus are housed within a housing, said housing comprising an input opening for inputting the reinforcement elongate member into the second module (into the second channel, when present in the second module) and an output opening communicated with the outlet of the first channel for coupling the same to the inlet orifice of the tubular cavity.

For an embodiment, the injector apparatus of the first aspect of the present invention further comprises one or more control units operatively connected to the holding system and to the second module and being configured to control:
- the holding system, to hold the segment of the reinforcement elongate member located at the second module, outside the first channel, and
- the holding system and the second module, to make at least part of the holding system and the second module relatively move together (for example, by driving a linear actuator coupled to the guide arrangement or to the support of the same), with respect to the first module, in the approaching movement, while the segment is held.

For different implementations of that embodiment, alternative or complementary:
- the one or more control units is/are also configured to control the holding unit, to unhold the segment of the reinforcement elongate member located at the second module, and the holding system and the second module, to make at least part of the holding system and the second module relatively move together (for example, by driving a linear actuator coupled to the guide arrangement or to the support of the same), with respect to the first module, in the distancing movement, when the segment is unheld;
   and/or
- the one or more control units is/are also operatively connected to the further holding system and is configured to control the same to hold the segment of the reinforcement elongate member located inside the first channel during the distancing movement, to avoid the movement of the reinforcement elongate member;
   and/or
- the one or more control units is/are also operatively connected to the resin impulsion unit to control the same:
- during the approaching movement: to inject resin under pressure into the first channel to flow towards its outlet simultaneously with the reinforcement elongate member, and
- during the distancing movement: so as not to inject resin into the first channel or inject resin into the first channel but in a controlled manner to avoid the injected resin flow out of the first channel through its inlet.

For an implementation of the above described embodiment for which the second channel further comprises a rigid tube and the first channel comprises a rigid tubular through opening, during the distancing movement, the resin pressure is kept high and the flow rate is precisely controlled so that as the second module moves backwards, i.e., according to the distancing movement, and the rigid tube (when present) retracts with it, and/or during a certain time after that distancing movement has ended, a counterflow of resin towards the rear is generated. which fills the inner perimeter space of the rigid tubular through opening that was previously occupied by the rigid tube and now becomes free, and expels the air from that perimeter space and from the interior of the reinforcement elongate member through the back of the injector apparatus. The resin flow rate is precisely controlled to prevent it from coming out of the back. This allows porosity to be minimized within the reinforcement elongate member (such as withing the fibers forming the same, for an embodiment) and thus within the final reinforced body.

Alternatively, the injector apparatus does not comprise any or some of those one or more control units, so that some or all of the functions described above are caried out manually or semi-automatically.

Further conventional components, such as linear motors, electric or pneumatic actuators, electric and electronic circuitry, wired and/or wireless communication means, kinematic chains, drivers, etc., can also be included or operatively connected to the guide arrangement and/or supports of the same and/or to the one or more control units, to allow the manual, semi-automatic or automatic control of the relative movement of the second module with respect to the first module. These components are not described in detail herein not to obscure the description of the innovative features of the invention.

According to an embodiment:
- the first module comprises two or more first channels, including the above mentioned first channel and at least one further first channel defined as that first channel, running in parallel and with respective inlets configured for receiving respective reinforcement elongate members to be longitudinally displaced through those two or more first channels; and
- the holding system is configured and arranged to simultaneously hold the respective parallel segments of the reinforcement elongate members located at the second module, and to relatively move with the second module in the approaching movement, while those segments are simultaneously held, to drag the held segments so as to push any other segments of the reinforcement elongate members already placed within the two or more first channels, to cause the longitudinal displacement of the reinforcement elongate members through the two or more first channels.

For an implementation of that embodiment, those first channels have respective outlets converging into a common outlet for being coupled to an inlet orifice of the tubular cavity, for injecting therein the reinforcement elongate members exiting through that common outlet. This implementation can be applied, for example, to inject reinforcement elongate members into flattened tubular cavities.

For an alternative implementation of that embodiment, those first channels have respective outlets for being coupled to inlet orifices of respective tubular cavities, for simultaneously injecting the reinforcement elongate members into several tubular cavities.

Different alternative holding systems are envisaged to implement the holding system and/or further holding system of the injector apparatus of the first aspect of the present invention, such as:
- A pneumatic or hydraulic system, where a fluid is provided under pressure to exert a transversal pressure on the corresponding segment of the reinforcement elongate member, through the corresponding flexible tube (by deforming the same), wherein said pressure must be enough to hold the respective segment, by being trapped between the inner walls of the flexible tube. In this case, the flexible tube should be surrounded by an outer chamber, wherein the fluid is provided in order to generate said pressure.
- A mechanical system comprising, for example, one or more clamps, one or more presses, etc., to exert a transversal pressure on the corresponding segment of the reinforcement elongate member, whether directly or through the corresponding flexible tube (by deforming the same), wherein said pressure must be enough to hold the respective segment, whether by being trapped between the inner walls of the flexible tube or, when there is no flexible tube, to be trapped against a support portion or against another clamp, piston, press, etc.

Any of those holding systems will include further conventional components, such as fluid pumps, fluid tubes, kinematic chains, valvular devices, linear motors, electric or pneumatic actuators, membrane and pressurized chambers, etc. These components are not described in detail herein not to obscure the description of the innovative features of the invention.

For some embodiments, only part of the holding system is configured and arranged to relatively move with the second module in the above mentioned approaching/distancing movements, i.e. only part of its components, such as clamp(s), press(es), chamber(s) part of a kinematic chain, fluid tubes, or part of fluid tubes, etc., while the rest remain stationary (pumps, part of kinematic chains, some fluid tubes or part of fluid tubes, etc.).

According to an embodiment, the injector apparatus of the first aspect of the present invention comprises a supplier for supplying the elongate reinforcement member to the second module, such as a roller system coupled to and conveying the reinforcement elongate member towards the inlet of the second channel.

For some embodiments, the injector apparatus of the present invention has two main advantages: it effectively prevents the resin from coming out of the back and keeps the reinforcement elongate member very well guided throughout the entire path from where the push force is applied (for causing the approaching movement) until the injector apparatus exit (i.e. outlet of the first channel), a very important factor to maximize the critical buckling load, to be able to exert a greater push force on reinforcement elongate member and, consequently, achieve a greater injection capacity (longer tubular cavity lengths, more complex trajectories, etc.).

A second aspect of the present invention relates to a kit for an injector apparatus, comprising the first and second modules of the injector apparatus of the first aspect, provided as a detachable and interchangeable pair of modules, adapted to be mounted on the injector apparatus.

The components of the kit of the second aspect, for some embodiments, are semi-fungible or fungible components for the injector apparatus, i.e., with the aim of being as economical as possible and easy to replace, the components of the kit are designed, for some embodiments, to be passive, that is, all the motors and actuators comprised by the injector apparatus (for the embodiments for which they are present) are part of a structure where it is mounted.

For an embodiment, the kit of the second aspect of the present invention comprises several first modules and several second modules, with first channels and second channels having several different diameters, so that they can be used to inject reinforcement elongate members into tubular cavities of different diameters.

### Brief Description of the Drawings

The previous and other advantages and features will be better understood from the following detailed description of embodiments, with reference to the attached drawings, which must be considered in an illustrative and non-limiting manner, in which:
Figure 1 is a perspective view schematically showing part of the injector apparatus of the first aspect of the invention, particularly the first module and further holding system, the latter comprising a transversal mechanical press, for an embodiment.
Figure 2 is another perspective view schematically showing another part of the injector apparatus of the first aspect of the invention, particularly the second module and the holding system, the latter comprising a transversal mechanical press, for an embodiment.
Figures 3 and 4 are two respective perspective views schematically showing the injector apparatus of the first aspect of the invention, for the embodiment shown in Figures 1 and 2, with the first and second modules mutually coupled.
Figure 5 is an elevational side view showing the injector apparatus of Figures 3 and 4, for the same embodiment.
Figure 6 schematically shows a side cross-section of the first module of the injector apparatus of the first aspect of the present invention and of the kit of the second aspect, for an embodiment.
Figure 7 schematically shows a side cross-section of the second module of the injector apparatus of the first aspect of the present invention and of the kit of the second aspect, for an embodiment.
Figure 8 schematically shows a side cross-section of the first module of Figure 6 and the second module of Figure 7, mutually coupled.
Figure 9 schematically shows a side cross-section as that of Figure 8 but with a reinforcement elongate member placed within the first and second channels defined by the first and second modules, respectively.

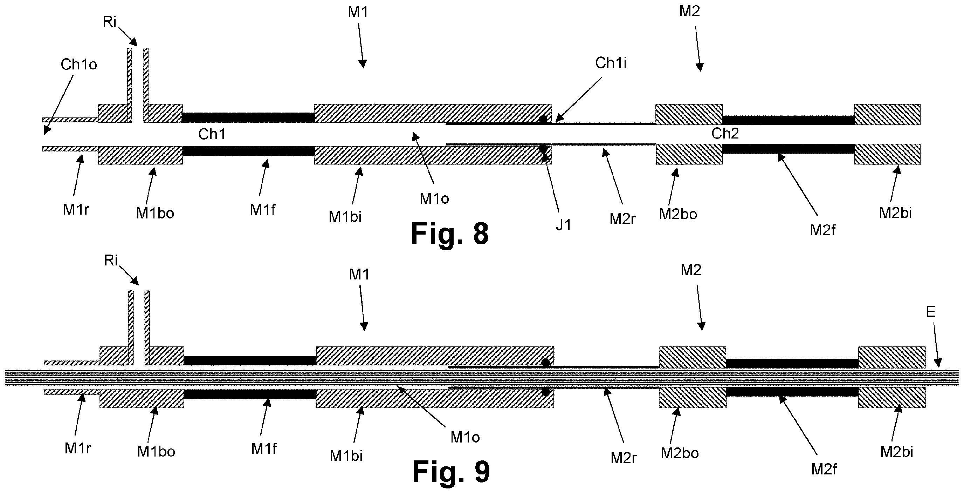

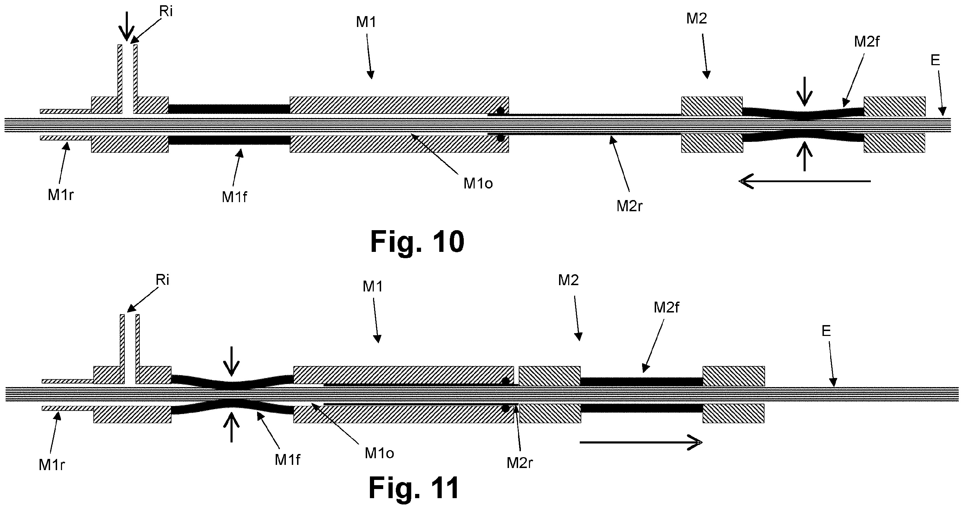

Figure 10 schematically shows a side cross-section as that of Figure 9 but with the flexible tube of the second channel being transversally pressed by applying forces represented by two opposite arrow lines (by means of the holding system, not shown) to hold the segment of the reinforcement elongate member placed within that flexible tube, and then relatively move the second module, with respect to the first module, in an approaching movement represented by a horizontal arrow line, to drag that held segment and thus longitudinally displace the whole reinforcement elongate member towards the outlet of the first channel to be injected into the tubular cavity (not shown).
Figure 11 schematically shows a side cross-section similar to that of Figure 10, for the same embodiment, but once the approaching movement has ended, and the further flexible tube of the first channel is being transversally pressed by applying forces represented by two opposite arrow lines (by means of the further holding system, not shown) to hold the segment of the reinforcement elongate member placed within that further flexible tube, and then relatively move only the second module, with respect to the first module, in a distancing movement represented by a horizontal arrow line, while the reinforcement elongate member remains stationary.
Figure 12 schematically shows a side cross-section as that of Figure 9, but with a holding system for pressing the flexible tube of the second module and a further holding system for pressing the further flexible tube of the first module, for an embodiment for which the holding system and further holding system comprise transversal mechanical clamps, or clamp arms, schematically depicted.
Figure 13 schematically shows a side cross-section similar to that of Figure 12, but for an alternative embodiment for which both the holding system and the further holding system comprise respective chambers, housing the flexible tube and further flexible tube, with a corresponding inlet for the entry of a fluid under pressure to cause the transversal pressure on the flexible tube and further flexible tube.
Figure 14 schematically shows a side cross-section of the first module and the second module of the invention mutually coupled with a reinforcement elongate member placed within the first and second channels, for an embodiment for which those channels do not comprise flexible tubes, and the corresponding segments of the reinforcement elongate member are transversally pressed directly by mechanical plunger clamps or pistons of the holding system and the further holding system, respectively,

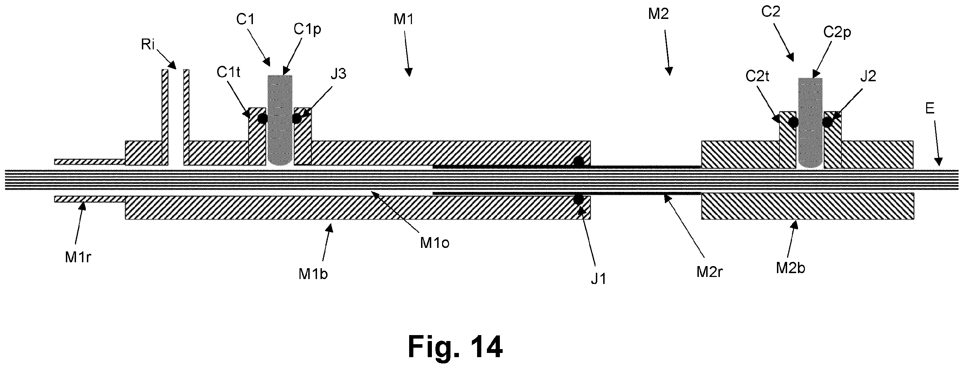

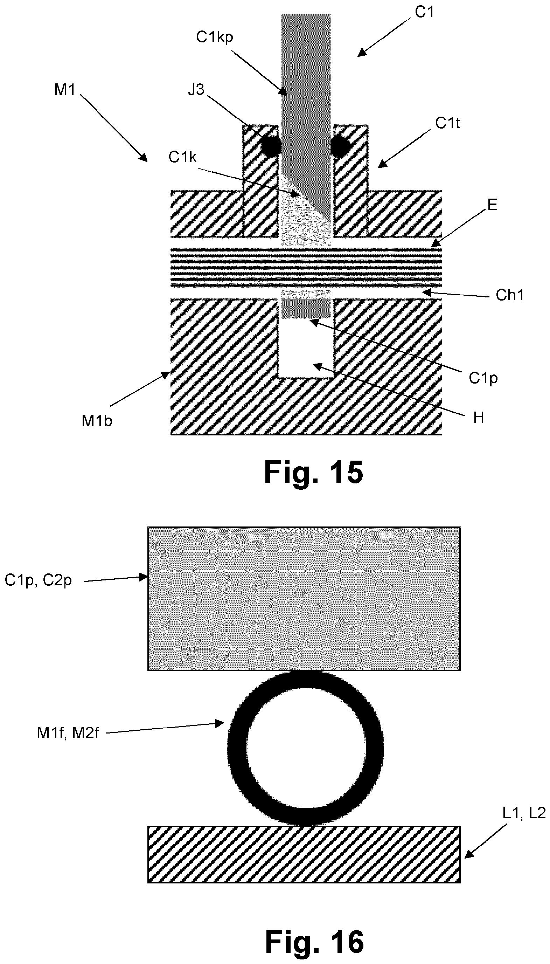

Figure 15 schematically shows part of a side cross-section of the further holding system, for an embodiment for which, like in Figure 14, the first channel does not comprise any flexible tube, and the segment of the reinforcement elongate member is transversally pressed directly by a mechanical plunger clamp, but in this case the reinforcement elongate member is inserted through an opening defined in a piece between a knife portion and a lower press end portion, so that the pressure to hold the segment is exerted by a vertical upwards displacement of that piece and the reinforcement elongate member is cut by the knife portion when that piece is vertically displaced downwards.
Figure 16 schematically shows a front cross-section of part of the components of the first module of Figure 1 or the second module of Figure 2, particularly the respective transversal mechanical press, flexible tube, and a lower support portion.
Figure 17 schematically shows a front cross-section similar to that of Figure 16, but for a different embodiment for which, instead of the lower support portion, the respective flexible tube is housed within a rigid outer piece that avoids the radial expansion of the flexible tube when the resin is injected under pressure inside the injector.
Figure 18 schematically shows a front cross-section similar to that of Figure 17, but for a different embodiment for which the rigid outer piece is designed to allow a controlled expansion of the flexible tube when the resin is injected under pressure inside the injector and also to allow the flexible tube to adopt an elliptical shape when pressed by the transversal mechanical press.
Figure 19 differs from Figure 18 only in that instead of a mechanical press, the holding system and the further holding system (for a non-illustrated embodiment, only one of them) comprise respective chambers, housing the flexible tube and further flexible tube, with a corresponding inlet for the entry of a fluid under pressure to cause the transversal pressure on the flexible tube and further flexible tube, wherein in this case the chambers are generated by the respective rigid outer pieces.
Figure 20 schematically shows a side cross-section similar to that of Figure 9, but for an embodiment for which there are three parallel arrangements of mutually coupled first and second channels, so that three tubular cavities can be injected simultaneously with the three respective reinforcement elongate members individually exiting through the outlets of the first channels.
Figure 21 schematically shows a side cross-section similar to that of Figure 20, but for an embodiment for which the outlets of the three first channels converge into a common outlet to inject a tubular cavity of a larger cross-section.
Figure 22 schematically shows, by means of a block diagram, the injector apparatus of the first aspect of the present invention, for an embodiment.

### Detailed Description of Several Embodiments

As illustrated, according to different embodiments, in the appended Figures, the first aspect of the present invention relates to an injector apparatus, for injecting, by holding and dragging, a reinforcement elongate member E (generally, comprising a plurality of continuous fibres) into a tubular cavity of a body (not shown).

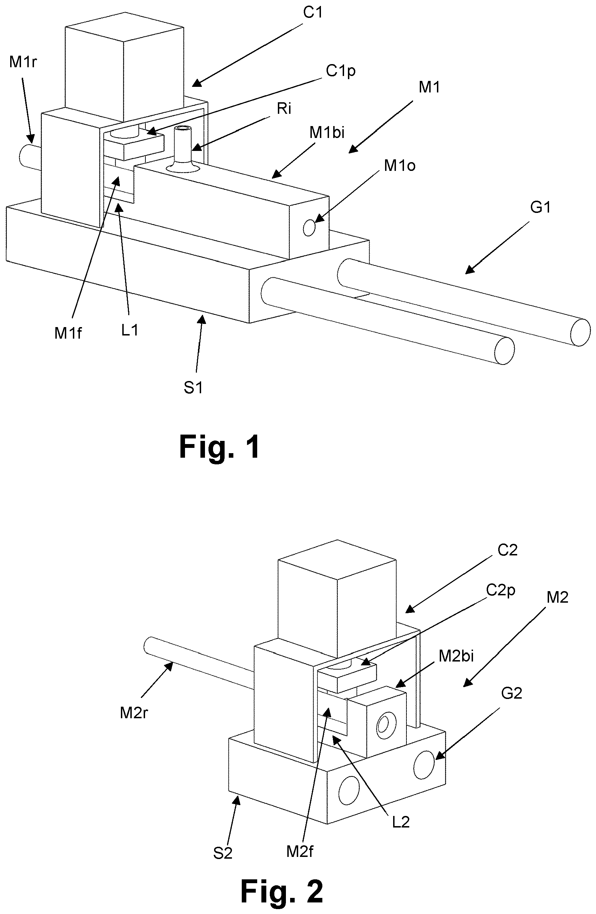

As shown in Figures 1, 3-6, and 8-14, for different embodiments, the injector apparatus of the first aspect of the invention and the kit of the second aspect comprises:
- a first module M1 having a first channel Ch1 with:
   - an inlet Ch1i configured for receiving the reinforcement elongate member E (see Figures 9-14) to be longitudinally displaced through the first channel Ch1, and
   - an outlet Ch1o configured for being coupled to an inlet orifice of the tubular cavity, for injecting therein the reinforcement elongate member E exiting through that outlet Ch1o after being longitudinally displaced through the first channel Ch1.

The injector apparatus of the first aspect of the invention and the kit of the second aspect further comprises, as shown in Figures 2-5, 7, and 8-14, for different embodiments, a second module M2 placed, at least in part, adjacent to the first channel inlet Ch1i, and being relatively moveable with respect to the first module M1 in an approaching/distancing alternative movement.

As shown also in those Figures 2-5, and 12-14, for different embodiments, the injector apparatus of the first aspect of the invention further comprises a holding system C2 configured and arranged to hold a segment of the reinforcement elongate member E located at the second module M2, outside the first channel Ch1, and to relatively move, at least in part, with the second module M2 in an approaching movement (represented by a horizontal arrow line pointing to the left in Figure 10, where the second module M2 has been depicted at the start location of that approaching movement) of the approaching/distancing alternative movement, while that segment is held, to drag the held segment so as to push any other segment of the reinforcement elongate member E already placed within the first channel Ch1, to cause the longitudinal displacement of the reinforcement elongate member E through the first channel Ch1, and thus towards the tubular cavity.

The holding system C2 is also configured and arranged to unhold the segment of the reinforcement elongate member E, and to make at least part of the holding system C2 and the second module M2 relatively move with respect to the first module M1, in a distancing movement (represented by a horizontal arrow line pointing to the right in Figure 11, where the second module M2 has been depicted at the start location of that distancing movement) of the approaching/distancing alternative movement, when that segment is unheld.

For the embodiments shown in Figures 2-5, 7, and 8-14, the second module M2 comprises a second channel Ch2 for the passage of the reinforcement elongate member E therethrough (see Figures 9-14), and the holding system C2 is configured and arranged to hold the above mentioned segment when placed within that second channel Ch2.

For the embodiments of Figures 2-5, 7, and 8-13, that second channel Ch2 comprises a flexible tube M2f and a rigid tube M2r with an inlet fluidically connected to an outlet of that flexible tube M2f, in this case through an intermediate hollow piece M2bo. A further hollow piece M2bi is attached to the other end of the flexible tube M2f. The reinforcement elongated member E is introduced (for example pushing it manually or by means of a roller system) into the injector apparatus through an inlet opening of that further hollow piece M2bi.

For those embodiments including the flexible tube M2r, the holding system C2 is configured and arranged to hold the above mentioned segment of the reinforcement elongate member E when placed within the flexible tube M2f, by transversally pressing the flexible tube M2f (for example, by applying those forces represented by two opposite arrow lines in Figure 10), so that the flexible tube M2f and the segment held thereinto move together in the approaching movement.

As shown in Figures 1, 3-6, and 8-14, for different embodiments, the first channel Ch1 comprises a rigid tubular through opening M1o for receiving the rigid tube M2r, and the rigid tube M2r is configured and arranged to enter, by its free end, into that rigid tubular through opening M1o and to longitudinally displace therethrough, during the distancing movement together with the flexible tube M2f, and during the approaching movement also together with the segment held into the flexible tube M2f.

Preferably, the rigid tube M2r has an outer diameter substantially equal to the diameter of the rigid tubular through opening M1o and a very thin wall, to avoid the reinforcement elongate element E suffering from buckling and allow a high pushing longitudinal force be applied thereto.

As shown in Figures 1, 3-6, and 8-13, the first channel Ch1 comprises a further flexible tube M1f with an inlet fluidically connected with the rigid tubular through opening M1o, which is defined within a hollow piece M1bi, and an outlet rigid tube M1r that constitutes the outlet Ch1o of the first channel Ch1 and is fluidically connected with an outlet of the further flexible tube M1f, in this case through an intermediate hollow piece M1bo.

The outlet rigid tube M1r is made to be coupled with the entrance of the tubular cavity, to inject the same with the reinforcement elongate member E.

As shown in Figures 1, 3-5, and 12-14, the injector apparatus further comprises a further holding system C1 configured and arranged to hold the segment of the reinforcement elongate member E located inside the first channel Ch1 during the distancing movement, to avoid the movement of the reinforcement elongate member E.

For the embodiments of Figures 1, 3-6, and 8-13, the further holding system C1 is configured and arranged to hold the segment of the reinforcement elongate member E located inside the first channel Ch1 when placed within the further flexible tube M1f, by transversally pressing the further flexible tube M1f (for example, by applying those forces represented by two opposite arrow lines in Figure 11).

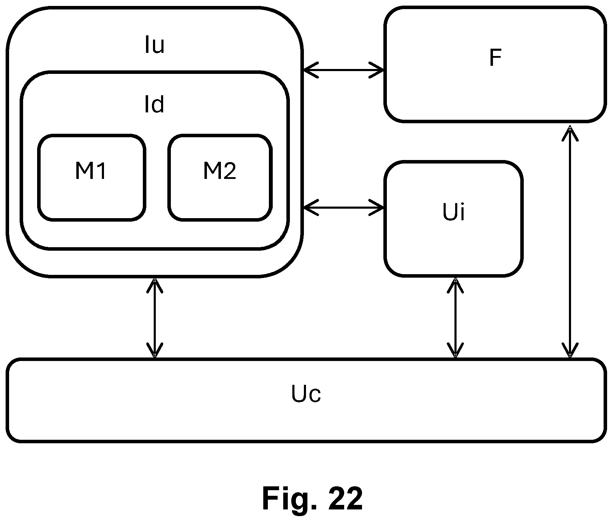

For the embodiments illustrated in Figures 1, 3-6, and 8-14, the first channel Ch1 has a resin inlet Ri for receiving resin, and the injector apparatus further comprises a resin impulsion unit Ui (see Figure 22) for injecting resin into the first channel Ch1 through that resin inlet Ri.

For the embodiment of Figures 1, and 3-5, the first channel Ch1 also comprises a resin outlet Ro longitudinally distanced from the resin inlet Ri along the first channel Ch1 and fluidically connected to the resin impulsion unit Ui for implementing a closed fluidic circuit, wherein the resin impulsion unit Ui is configured for recirculating resin through at least part of the first channel Ch1 by injecting resin through the resin inlet Ri and receiving the resin from the resin outlet Ro or vice versa.

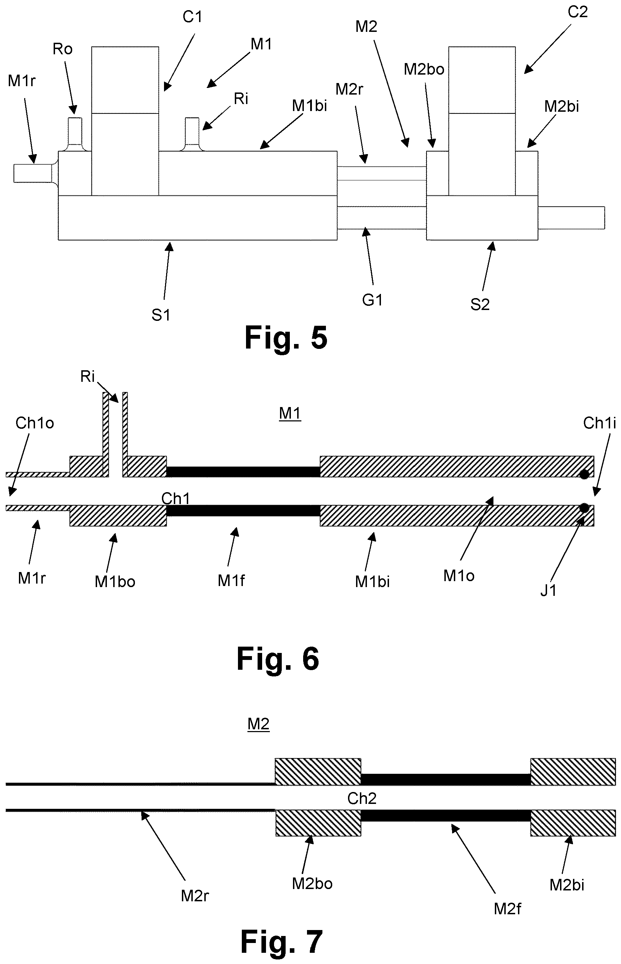

As shown in Figures 6-14, a sealing gasket J1 is also provided at the rigid tubular through opening M1o to surround the rigid tube M2r, and thus seal the first channel Ch1 at its back end (right side, according to the position illustrated in the Figures) in order to achieve a tight joint between the rigid tube M2r and hollow piece M1bi, particularly to avoid resin exiting through that back end of the first channel Ch1 between the rigid tube M2r and hollow piece M1bi. Indeed, in approaching movement, the injector apparatus must be sealed to ensure that the pressurized resin can only exit into the tubular cavity of the body. The holding system C2 of the second module M2 plays an important role in this (to prevent the resin from coming out from the back) and also the use of sealing joints between the different parts that have relative movement between them, that is, between the second module M2 and the first module M1, such as the sealing gasket J1 (and other sealing gaskets described below, for other embodiments).

For some embodiments, the injector apparatus comprises a guide arrangement G1, G2 for linearly guiding the second module M2 with respect to the first module M1 according to said approaching/distancing alternative movement.

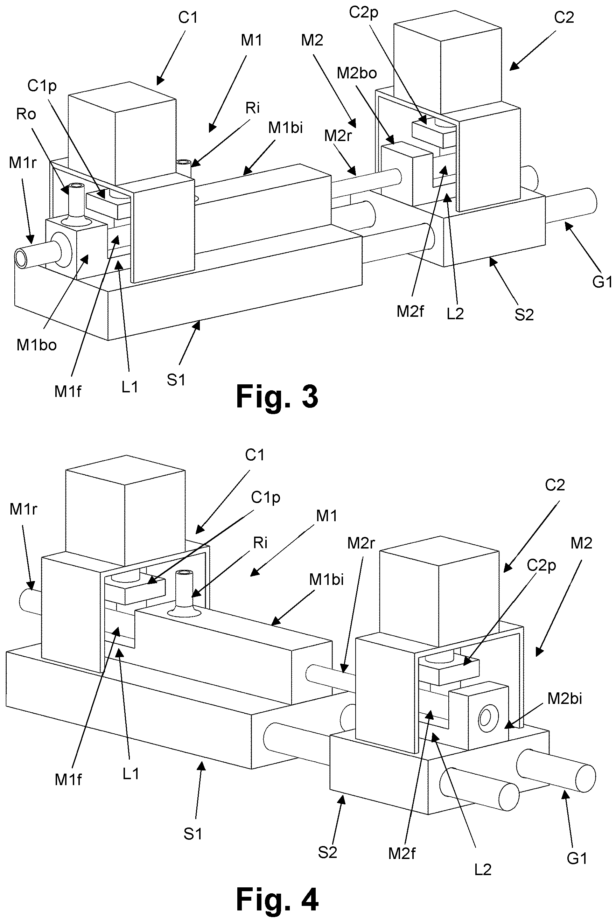

A schematic implementation of that guide arrangement G1, G2 is shown in Figures 1 to 5, particularly formed by two rods G1, projecting from a first support S1 that supports the first module M1 in a stationary manner, and two through openings G2 defined in a second support S2 that support the second module M2. As shown in Figures 3, 4 and 5, the two rods G1 are inserted and slide along the two through openings G2 such that both modules M1 and M2 can be displaced linearly in a relative manner.

Different alternative holding systems are envisaged to implement the holding system C1 and/or further holding system C2 of the injector apparatus of the first aspect of the present invention.

For example, for the embodiment shown in Figures 1 to 5, both the holding system C2 and the further holding system C1 comprise a respective transversal mechanical press C2p, C1p, vertically displaceable to exert a downwards transversal pressure on the corresponding flexible tube M2f or further flexible tube M1f, against a lower support portion L2, L1, such that the flexible tube M2f or further flexible tube M1f are deformed and the respective segment of the reinforcement elongate member E is trapped, and thus held, between the inner walls of the flexible tube M2f or further flexible tube M1f.

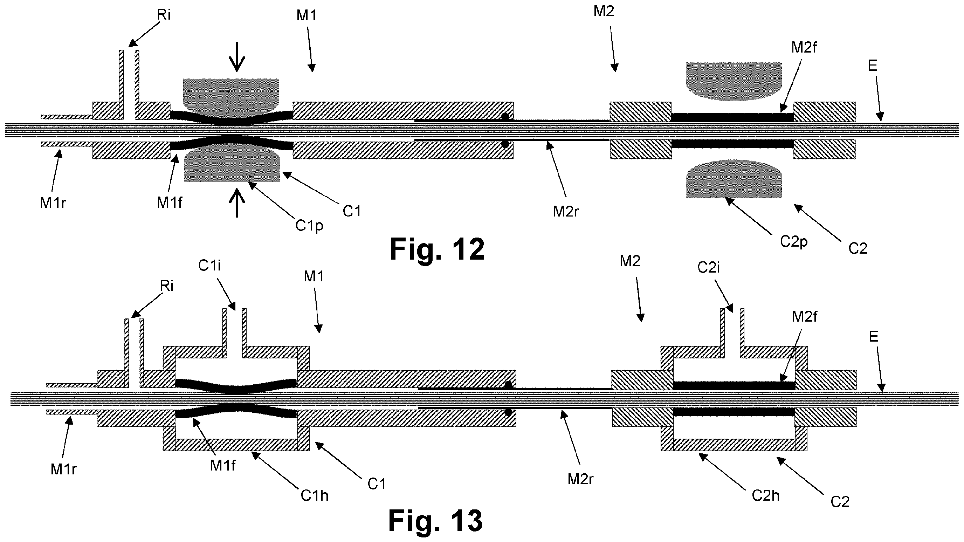

Figure 12 shows a similar embodiment, schematically, but in this case each of the holding system C2 and the further holding system C1 comprise two opposite clamps C2p, C1p, or two opposite clamp arms, that when approaching to each other exert both a downwards and an upwards transversal pressure on the corresponding flexible tube M2f or further flexible tube M1f, such that the flexible tube M2f or further flexible tube M1f are deformed and the respective segment of the reinforcement elongate member E is trapped therein.

An alternative embodiment is shown in Figure 13, for which the holding system C2 and the further holding system C1 comprise a pneumatic or hydraulic system, with comprise respective chambers C2h, C1h housing the flexible tube M2f and further flexible tube M1f, with a corresponding inlet C2i, C1i for the entry of a fluid under pressure to cause the transversal pressure on the flexible tube M2f and further flexible tube M1f.

A further alternative embodiment is shown in Figure 14, for which the first Ch1 and second Ch2 channels do not comprise flexible tubes, and the holding system C2 and the further holding system C1 comprise respective transversal mechanical plunger clamps or pistons C2p, C1p vertically displaceable through a tubular portion C2t, C1t, sealed with a corresponding sealing gasket J2, J3 (to avoid the exit of resin therethrough), to exert a downwards transversal pressure directly on the corresponding segment of the reinforcement elongate member E. In this embodiment, the first channel Ch1 comprises the above mentioned outlet rigid tube M1r and a hollow piece M1b, and the second channel Ch2 comprises the above mentioned rigid tube M2r and a hollow piece M2b.

Figure 15 schematically shows an embodiment for which, like in figure 14, the first channel Ch1 does not comprise any flexible tube, and the segment of the reinforcement elongate member E is transversally pressed directly by a mechanical plunger clamp, but in this case the reinforcement elongate member E is inserted through an opening defined in a piece C1kp between a knife portion C1k and a lower press end portion C1p, so that the pressure to hold the segment is exerted by a vertical upwards displacement of that piece C1kp and the reinforcement elongate member E is cut by the knife portion C1k when that piece C1kp is vertically displaced downwards. In this case, that piece C1kp is also vertically displaceable through a tubular portion C1t, sealed with a corresponding sealing gasket J3 to avoid the exit of resin therethrough, and a lower housing H or recess defined in the lower wall of hollow piece M1b.

For an implementation of that embodiment, the mechanical plunger clamp also acts as a valve to activate and deactivate, by means of the resin impulsion unit Ui, the resin recirculation process.

In Figure 16 some of the components of the second module M2 and/or first module M1 of Figures 1-5 are shown, particularly the respective transversal mechanical press C2p, C1p, flexible tube M2f or further flexible tube M1f, and a lower support portion L2, L1. The shown arrangement is compatible with flexible tubes such as polyamide or polyurethane (typical pneumatic tubes), which can be crushed but are rigid at expansion. The problem with these tubes is that they do not recover their original shape and their durability is relatively low due to the stresses they suffer when repeatedly crushed. This arrangement is also compatible with tubes made of elastomeric material but with their perimeter reinforced with a mesh, for example made of fiberglass, aramid or polyester. This type of tubes could significantly improve the durability of this arrangement.

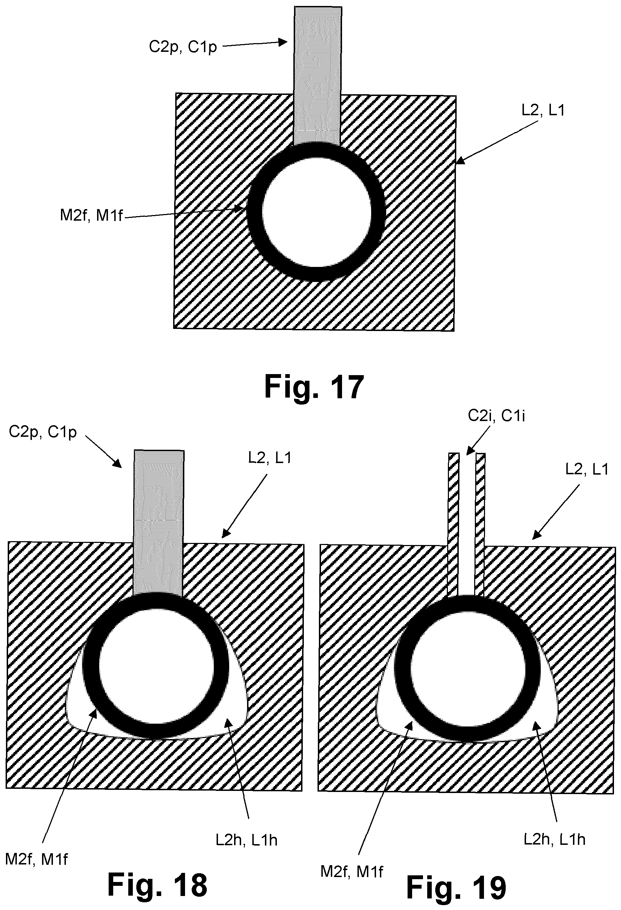

An alternative embodiment is shown in Figure 17, in which, instead of the lower support portion, the respective flexible tube M2f or further flexible tube M1f is housed within a rigid outer piece L2, L1 that avoids the radial expansion of the flexible tube M2f or further flexible tube M1f when the resin is introduced under pressure inside the injector. This arrangement is compatible with tubes made of elastomeric materials. It is designed so that the expansion of the flexible tube M2f or further flexible tube M1f is completely limited by the rigid outer piece L2, L1. As the flexible tube M2f or further flexible tube M1f is completely guided around its perimeter, but their durability is also relatively low due to the stresses they suffer when repeatedly crushed.

Therefore, other alternative embodiments are provided in Figures 18 and 19, for which the rigid outer piece L2, L1 defines an inner housing L2h, L1h with a cross-section different in shape and size to the shape and size of the cross-section of the flexible tube M2f or further flexible tube M1f, thus leaving some gaps between the outer surface of the flexible tube M2f or further flexible tube M1f and the inner wall of those housings L2h, L1h, when the flexible tube M2f or further flexible tube M1f are not expanded.

The shape and size of these inner housings L2h, L1h are selected to control the regions of the flexible tube M2f or further flexible tube M1f that can be expanded. They are designed to allow a controlled expansion of the flexible tube M2f or further flexible tube M1f when the resin is introduced under pressure inside the injector and also to allow the flexible tube M2f or further flexible tube M1f to adopt an elliptical cross-section when transversally pressed.

The arrangements of Figures 18 and 19 are designed to allow the flexible tube M2f or further flexible tube M1f to take the shape of an ellipse when crushed, which is optimal from the point of view of efficiency and durability of the tube. If an unreinforced elastic tube is used, it is assumed that it will expand when resin is injected under pressure, until it touches the inner rigid wall of the corresponding rigid outer piece L2, L1. The space between both is designed so that the tensions suffered by the tube when expanding are not critical.

If a reinforced elastic tube is used, this expansion can be avoided or significantly limited.

In Figure 18, the transversal pressure is exerted by means of corresponding transversal mechanical presses C2p, C1p, and in Figure 19 by means of a pressurized fluid introduced through inlets C2i, C1i.

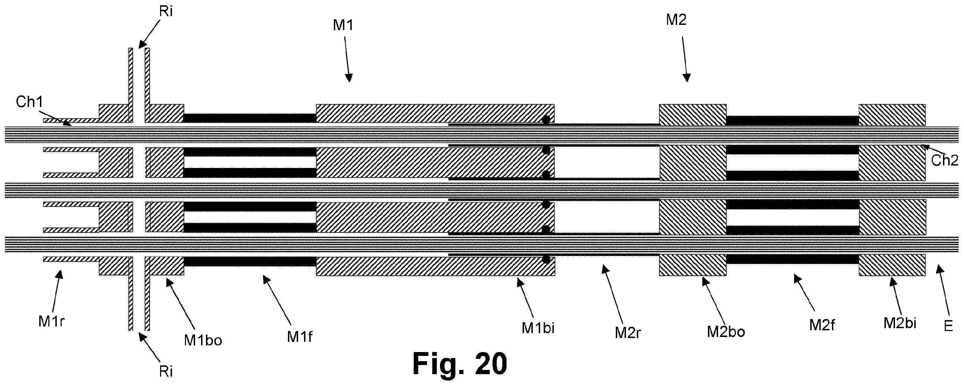

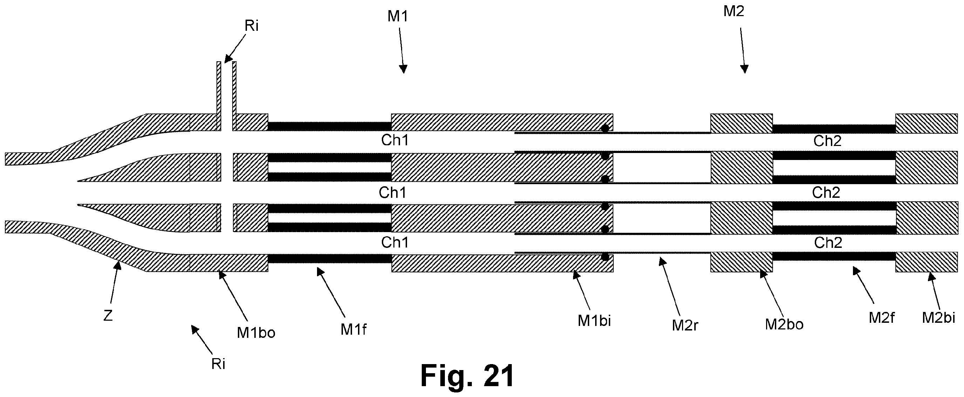

Figures 20 and 21 show two embodiments of the injector apparatus of the first aspect of the present invention implementing respective multi-injector apparatuses, to inject several tubular cavities at the same time (three, in this case), for the embodiment of Figure 20, or a larger tubular cavity, for the embodiment of Figure 21.

In the embodiment of Figure 20, there are three parallel arrangements of mutually coupled first Ch1 and second Ch2 channels (any number other than three is also possible), so that three tubular cavities can be injected simultaneously with the three respective reinforcement elongate members E individually exiting through the outlets of the first channels Ch1.

That embodiment has two resin inputs Ri in the intermediate hollow piece M1bo, but for slight variations of that embodiment there can be one resin inlet Ri per first channel Ch1 or only one resin inlet Ri in the intermediate hollow piece M1bo for all the first channels Ch1. In the first and third case, part of or all the first channels Ch1 are intercommunicated within the intermediate hollow piece M1bo so that the resin flows through all of them.

In the embodiment of Figure 21, there are also three parallel arrangements of mutually coupled first Ch1 and second Ch2 channels (any number other than three is also possible), but in contrast to that of Figure 20, the outlets of the three first channels Ch1 converge into a common outlet to inject a tubular cavity of a larger cross-section. That common outlet is provided in this case by means of front piece Z that could be integral with intermediate hollow piece M1bo or an independent piece attached thereto.

That front piece Z, or a variation thereof, when being an independent piece, could also be attached to the front part of the arrangement of Figure 20, to make the outlets of the first channels Ch1 converge into a common outlet.

The arrangement of Figure 21 also allows injecting flattened tubular cavities or with a rectangular cross-section, where the base is considerably larger than the height (for example two times larger or more).

Finally, Figure 22 schematically shows, by means of a block diagram, the injection apparatus of the first aspect of the present invention, for an embodiment, for which the injection apparatus comprises:
- an injection unit lu, comprising an injector device Id;
- that injection device Id, comprising the first M1 and second M2 modules;
- a supplier or feeding unit F (such as a roller system), for supplying the elongate reinforcement member E to the second module M2;
- the above mentioned resin impulsion unit Ui;
- a control unit Uc.

The operation of those components has been explained above, for different embodiments, the block diagram of Figure 22 showing a possible schematic arrangement thereof.

The arrow line connecting the resin impulsion unit Ui with the injection unit lu has been drawn bidirectional to represent a possible event in which there was a resin overflow or that resin exited as surplus through an exit of the tubular cavity to be injected was recovered, for example by coupling a tube to the outlet of the tubular cavity.

The control unit Uc has been depicted communicated bidirectionally to some of the components to represent possible exchange of electric signals to/from them, namely, to send output control signals to control those components and to receive input sensor signals provided by different sensors, such as:
- sensors for sensing the push force (for the approaching displacement), from the injection unit lu; the push force exerted on the reinforcement elongate member E must be precisely controlled to avoid breaking it;
- sensors for sensing the pressure and/or flow rate of the resin (at one or more locations), from the resin impulsion unit Ui; the resin flow must be precisely controlled (flow rate and pressure) to correctly impregnate the reinforcement elongate member E (for example, the fibers forming the same, when that is the case) and produce a drag force on it, which together with the push force on the reinforcement elongate member E, makes the injection process possible;
- optionally, different types of sensors from the feeding unit F to perform advanced functions (this feeding unit F can be just a passive system, such as a support for coils of the reinforcement elongate member E, or integrate motors and sensors for example to allow the automatic feeding of the injector apparatus).

For an embodiment, the resin impulsion unit Ui also integrates a resin cleaning system necessary at the end of use of the injection apparatus.

For an embodiment, the control unit Uc is operatively connected to the holding system C2 and to the second module M2 and is configured to control:
- the holding system C2, to hold the segment of the reinforcement elongate member E located at the second module M2, outside the first channel Ch1, and
- the holding system C2 and the second module M2, to make at least part of the holding system C2 and the second module M2 relatively move together, with respect to the first module M1, in the approaching movement, while that segment is held.

According to an embodiment, the control unit Uc is also configured to control the holding unit C2 to unhold that held segment of the reinforcement elongate member E, and the holding system C2 and the second module M2 to make at least part of the holding system C2 and the second module M2 relatively move together, with respect to the first module M1, in the distancing movement, when that segment is unheld.

For an embodiment, the control unit Uc is also operatively connected to the further holding system C1 and is configured to control the same to hold the segment of the reinforcement elongate member E located inside the first channel Ch1 during the distancing movement, to avoid the movement of the reinforcement elongate member E.

In an embodiment, the control unit Uc is also operatively connected to the resin impulsion unit Ui to control the same:
- during the approaching movement: to inject resin under pressure into the first channel Ch1 to flow towards the outlet Ch1o simultaneously with the reinforcement elongate member E, and
- during the distancing movement: so as not to inject resin into the first channel Ch1 or inject resin into the first channel Ch1 but in a controlled manner to avoid the injected resin flow out of the first channel Ch1 through said inlet Ch1i.

Depending on the embodiment, the control unit Uc is implemented by means of a single control unit or by means of a plurality of control units, operatively connected (wired and/or wirelessly) to operate synchronously, such that the synchronization of the approaching/distancing movements, holding and further holding systems, and resin impulsion flow are perfectly synchronized for the injection process to work correctly.

Also, depending on the embodiment, the control unit Uc includes one or more local and/or remote devices operatively connected, such as mechanical, pneumatic, electrical, electronic, computing, data processing, and/or data storage devices.

The following variants are also embraced for different embodiments (not illustrated) of the injector apparatus of the first aspect of the present invention:
- An injector for reinforcement elongate members implemented in the form of tapes (instead of bundles), for flattened or rectangular cavities.
- A vacuum system integrated into the resin impulsion unit Ui, for at least one of:
   - Applying vacuum at the end of the tubular cavity, to increase the pressure differential or only work with vacuum, and also to recover the excess of resin and reintroduce it into the resin impulsion unit Ui.
   - Applying vacuum inside the first M1 and/or second M2 modules to reduce air and porosity before injecting each section of the reinforcement elongate member E.
   - Applying vacuum at the back of the first M1 and/or second M2 modules to recover resin that comes out of injector to reintroduce it into the resin impulsion unit Ui, in the event that the injector is not completely tight.
- Improve the reinforcement elongate members resin impregnation with the interior geometry of the injector apparatus, to generate turbulences or flow in the radial direction and/or movement between the components (such fibers) of the reinforcement elongate member, aiming to facilitate the resin to enter its interior.
- Improve the reinforcement elongate members resin impregnation by exerting the above described transversal pressure (on the flexible tube M2f or further flexible tube M1f, or directly on the corresponding segments of the reinforcement elongate member E) progressively in a longitudinal direction, for example, using external rollers.
- Integrate a heating and/or pre-curing system for the resin inside the injector apparatus, for example using heat or UV.
- Integrate a static mixer to mix two resin components in the same injector apparatus.
- Integrate a system at the outlet Ch1o of the first module M1, i.e. at the free end of outlet rigid tube M1r, to allow to automatically couple and uncouple the injector apparatus with the tubular cavity inlet.
- Integrate sensors (such as the above mentioned) to monitor process parameters (push force, fiber advance, resin pressure...).•

A person skilled in the art could introduce changes and modifications in the embodiments described without departing from the scope of the invention as it is defined in the attached claims.

## Claims

1. An injector apparatus, for injecting, by holding and dragging, a reinforcement elongate member (E) into a tubular cavity of a body, **characterized in that** the injector apparatus comprises:
- a first module (M1) having a first channel (Ch1) with:
- an inlet (Ch1i) configured for receiving said reinforcement elongate member (E) to be longitudinally displaced through said first channel (Ch1), and
- an outlet (Ch1o) configured for being coupled to an inlet orifice of said tubular cavity, for injecting therein the reinforcement elongate member (E) exiting through said outlet (Ch1o) after being longitudinally displaced through the first channel (Ch1);
- a second module (M2) placed, at least in part, adjacent to said first channel inlet (Ch1i), and being relatively moveable with respect to said first module (M1) in an approaching/distancing alternative movement; and
- a holding system (C2) configured and arranged to hold a segment of the reinforcement elongate member (E) located at said second module (M2), outside said first channel (Ch1), and to relatively move, at least in part, with the second module (M2) in an approaching movement of said approaching/distancing alternative movement, while said segment is held, to drag the held segment so as to push any other segment of the reinforcement elongate member (E) already placed within the first channel (Ch1), to cause said longitudinal displacement of the reinforcement elongate member (E) through the first channel (Ch1).

2. The injector apparatus of claim 1, wherein said holding system (C2) is configured and arranged to unhold said segment of the reinforcement elongate member (E), and to make at least part of the holding system (C2) and the second module (M2) relatively move with respect to the first module (M1), in a distancing movement of said approaching/distancing alternative movement, when said segment is unheld.

3. The injector apparatus of claim 2, further comprising a further holding system (C1) configured and arranged to hold said segment of the reinforcement elongate member (E) located inside the first channel (Ch1) during said distancing movement, to avoid the movement of the reinforcement elongate member (E).

4. The injector apparatus of any of the previous claims, wherein the first channel (Ch1) has a resin inlet (Ri) for receiving resin, wherein the injector apparatus further comprises a resin impulsion unit (Ui) for injecting resin into the first channel (Ch1) through said resin inlet (Ri).

5. The injector apparatus of claim 4, wherein the first channel (Ch1) also comprises a resin outlet (Ro) longitudinally distanced from said resin inlet (Ri) along the first channel (Ch1) and fluidically connected to said resin impulsion unit (Ui) for implementing a closed fluidic circuit, wherein the resin impulsion unit (Ui) is configured for recirculating resin through at least part of the first channel (Ch1) by injecting resin through the resin inlet (Ri) and receiving the resin from the resin outlet (Ro) or vice versa.

6. The injector apparatus of any of the previous claims, wherein the second module (M2) comprises a second channel (Ch2) for the passage of the reinforcement elongate member (E) therethrough, and wherein the holding system (C2) is configured and arranged to hold said segment when placed within said second channel (Ch2).

7. The injector apparatus of claim 6, wherein said second channel (Ch2) comprises a flexible tube (M2f), and wherein the holding system (C2) is configured and arranged to hold said segment when placed within said flexible tube (M2f), by transversally pressing the flexible tube (M2f), so that the flexible tube (M2f) and the segment held thereinto move together in said approaching movement.

8. The injector apparatus of claim 7, wherein:
- said second channel (Ch2) further comprises a rigid tube (M2r) with an inlet fluidically connected to an outlet of said flexible tube (M2f), wherein said first channel (Ch1) comprises a rigid tubular through opening (M1o) for receiving said rigid tube (M2r), and wherein the rigid tube (M2r) is configured and arranged to enter, by its free end, into said rigid tubular through opening (M1o) and to longitudinally displace therethrough, during said distancing movement together with the flexible tube (M2f), and during said approaching movement also together with the segment held into the flexible tube (M2f), or
- said second channel (Ch2) further comprises a rigid tubular through opening with an inlet fluidically connected to an outlet of said flexible tube (M2f), wherein said first channel (Ch1) comprises a rigid tube configured and arranged to enter, by its free end, into said rigid tubular through opening and to longitudinally displace therethrough, during said distancing movement during which said rigid tubular through opening moves together with the flexible tube (M2f), and during said approaching movement during which the rigid tubular through opening moves together with the flexible tube (M2f) and also together with the segment held into the flexible tube (M2f).

9. The injector apparatus of claim 8, wherein the rigid tube (M2r) has an inner diameter ranging between 75% and 95% the diameter of said rigid tubular through opening (M1o), and an outer diameter equal or a 5% lower than the diameter of said rigid tubular through opening (M1o).

10. The injector apparatus of claim 3 or of any of claims 4 to 9 when depending on claim 3, wherein the first channel (Ch1) comprises a further flexible tube (M1f), and wherein the further holding system (C1) is configured and arranged to hold said segment of the reinforcement elongate member (E) located inside the first channel (Ch1) when placed within said further flexible tube (M1f), by transversally pressing the further flexible tube (M1f).

11. The injector apparatus of claim 10 when depending on claim 8 or 9, wherein the first channel (Ch1) further comprises said rigid tubular through opening (M1o) fluidically connected with an inlet of said further flexible tube (M1f).

12. The injector apparatus of claim 11, wherein the first channel (Ch1) further comprises an outlet rigid tube (M1r), constituting the outlet (Ch1o) of the first channel (Ch1) and being fluidically connected with an outlet of the further flexible tube (M1f).

13. The injector apparatus of any of the previous claims, comprising a guide arrangement (G1, G2) for linearly guiding the second module (M2) with respect to the first module (M1) according to said approaching/distancing alternative movement.

14. The injector apparatus of any of the previous claims, further comprising at least one control unit (Uc) operatively connected to the holding system (C2) and to the second module (M2) and being configured to control:
- said holding system (C2), to hold said segment of the reinforcement elongate member (E) located at the second module (M2), outside said first channel (Ch1), and
- the holding system (C2) and the second module (M2), to make at least part of the holding system (C2) and the second module (M2) relatively move together, with respect to the first module (M1), in said approaching movement, while said segment is held.

15. The injector apparatus of claim 14 when depending on claim 2, 3 or 4, wherein:
- said at least one control unit (Uc) is also configured to control said holding unit (C2), to unhold said segment of the reinforcement elongate member (E), and the holding system (C2) and the second module (M2), to make at least part of the holding system (C2) and the second module (M2) relatively move together, with respect to the first module (M1), in said distancing movement, when said segment is unheld;
and/or
- said at least one control unit (Uc) is also operatively connected to the further holding system (C1) and is configured to control the same to hold said segment of the reinforcement elongate member (E) located inside the first channel (Ch1) during said distancing movement, to avoid the movement of the reinforcement elongate member (E);
and/or
- the at least one control unit (Uc) is also operatively connected to said resin impulsion unit (Ui) to control the same:
- during said approaching movement: to inject resin under pressure into the first channel (Ch1) to flow towards said outlet (Ch1o) simultaneously with the reinforcement elongate member (E), and
- during said distancing movement: so as not to inject resin into the first channel (Ch1) or inject resin into the first channel (Ch1) but in a controlled manner to avoid the injected resin flow out of the first channel (Ch1) through said inlet (Ch1i).

16. The injector apparatus of any of the previous claims, wherein:
- the first module (M1) comprises two or more first channels (Ch1s), including said first channel (Ch1) and at least one further first channel defined as said first channel (Ch1), running in parallel and with respective inlets configured for receiving respective reinforcement elongate members (E) to be longitudinally displaced through said two or more first channels (Ch1s); and
- the holding system (C2) is configured and arranged to simultaneously hold the respective parallel segments of the reinforcement elongate members (E) located at the second module (M2), and to relatively move with the second module (M2) in said approaching movement, while said segments are simultaneously held, to drag the held segments so as to push any other segments of the reinforcement elongate members (E) already placed within the two or more first channels (Ch1), to cause said longitudinal displacement of the reinforcement elongate members (E) through the two or more first channels (Ch1).

17. A kit for an injector apparatus, comprising the first (M1) and second (M2) modules of the injector apparatus of any of the previous claims, provided as a detachable and interchangeable pair of modules (M1, M2) adapted to be mounted on the injector apparatus.
